(19) **Europäisches Patentamt European Patent Office Office européen des brevets**

(11) **EP 3 894 293 B1**

(12) **EUROPEAN PATENT SPECIFICATION**

(45) Date of publication and mention
of the grant of the patent:
**28.01.2026  Bulletin 2026/05**

(21) Application number: **19835729.5**

(22) Date of filing: **11.12.2019**

(51) International Patent Classification (IPC):
**B60W 30/09** *(2012.01)*

(52) Cooperative Patent Classification (CPC):
**B60W 30/09; B60W 30/0953; B60W 30/0956;
B60W 30/18163; B60W 50/0098; G05D 1/0066;
G05D 1/0214;** B60W 2050/065; B60W 2710/18;
B60W 2710/20

(86) International application number:
**PCT/IB2019/060658**

(87) International publication number:
**WO 2020/121215 (18.06.2020 Gazette 2020/25)**

(54) **METHOD AND SYSTEM FOR PLANNING A PATH FOR A LAND VEHICLE FOR OBSTACLE AVOIDANCE WITH FAST REACTION, PARTICULARLY IN AN AUTONOMOUS DRIVE SCENARIO**

VERFAHREN UND SYSTEM ZUR WEGPLANUNG FÜR EIN LANDFAHRZEUG ZUR HINDERNISVERMEIDUNG MIT SCHNELLER REAKTION, INSBESONDERE IN EINEM AUTONOMEN FAHRSZENARIO

PROCÉDÉ ET SYSTÈME DE PLANIFICATION D'UN TRAJET POUR QU'UN VÉHICULE TERRESTRE ÉVITE DES OBSTACLES AVEC RÉACTION RAPIDE, EN PARTICULIER DANS UN SCÉNARIO DE CIRCULATION AUTONOME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.12.2018  IT 201800011029**

(43) Date of publication of application:
**20.10.2021  Bulletin 2021/42**

(73) Proprietor: **Marelli Europe S.p.A.
20011 Corbetta (MI) (IT)**

(72) Inventors:
• **GIORELLI, Michele
10122 Torino (IT)**

• **CORNO, Matteo
20134 Milano (IT)**
• **SAVARESI, Sergio Matteo
26100 Cremona (IT)**
• **ROSELLI, Federico
20138 Milano (IT)**

(74) Representative: **Deambrogi, Edgardo et al
Jacobacci & Partners S.p.A.
Corso Emilia 8
10152 Torino (IT)**

(56) References cited:
**DE-A1- 102008 016 377    DE-A1- 102014 016 567
US-A1- 2002 059 026    US-A1- 2015 353 062**

## Description

The present invention generally relates to assisted driving systems for a land vehicle, and in particular to a method and an onboard system for assisting a land vehicle, in particular in an autonomous driving scenario, in the planning of a path for avoiding obstacles in the tracking of a predetermined trajectory.

More specifically, the invention relates to a method and a system for generating an obstacle avoidance trajectory for a land vehicle following a planned path, as defined in independent claims 1 and 10, respectively.

In recent years, progress made in equipping land vehicles (hereinafter simply vehicles) with active vehicle driver assistance systems has contributed to a significant improvement in road traffic safety.

The challenge of the future is to design autonomous drive vehicles and to make their operation safe in a road environment crowded with other vehicles, whether they be autonomous drive vehicles or vehicles driven by a driver.

The operation of an autonomous vehicle is generally governed jointly by a navigation system and a trajectory definition system. The onboard navigation system is arranged to program a path on a large scale, i.e. on a road network scale (geographic scale), which occurs by determining a series of consecutive road segments adapted to connect a predetermined position of origin to a predetermined destination, possibly dynamically variable depending on detected traffic conditions or predefined traffic constraints of the road network (e.g., closure to traffic of certain road sections for work in progress). The trajectory definition system is arranged to automatically map vehicle movement trajectories on a local scale, on the order of several tens or hundreds of meters, to carry out the path programmed by the navigation system. This is done by determining the position, direction and speed of the vehicle over time depending on predetermined movement constraints, such as dynamic constraints of the vehicle - including speed, longitudinal acceleration, maximum steering angle - and environmental constraints - including traffic obstacles, and as a function of predetermined optimizations, for example minimizing the lateral acceleration of the vehicle.

In an autonomous driving context, a vehicle is predisposed to follow a predefined urban or extra-urban path along a series of road sections, for example determined by an onboard navigation system, along respective trajectories defined by time-variable Cartesian coordinates $(X_T(t), Y_T(t))$ and calculated in real time as a function of the segment of road through which the predefined path is achieved and actual traffic conditions concerning the aforementioned segment, detected by sensor systems that equip the vehicle, such as means of detecting the environment surrounding the vehicle and associated road marking recognition systems, radar, laser or ultrasonic sensor means or video cameras and associated obstacle recognition systems, as well as the determination of the position and speed thereof.

In a vehicle, the current position and direction are acquired by a fusion of the data detected by the sensor systems that equip the vehicle (e.g. GPS, video cameras, radar detectors, laser detectors, etc.). The longitudinal control of the vehicle - i.e., its advancement along the calculated trajectory - is carried out by actuating the propulsion system or the braking system, while the lateral control of the vehicle - i.e., the control of the vehicle's direction - is carried out by actuating the steering system.

The problem of planning the path for an autonomous driving vehicle has been extensively studied in the literature and many different approaches have been developed to take into account the most complex and uncertain driving environments.

Traditionally, a control system for an autonomous driving vehicle comprises three modules with specific functions, respectively an environment mapping and obstacle detection module, a trajectory generation module based on the driving environment mapped and the obstacles detected, and a tracking module of the generated trajectory.

The present document relates specifically to the generation of the trajectory of the vehicle.

Common techniques for processing trajectory generation under normal driving conditions rely on algorithms based on graph search. Optimization techniques are applied to take into account kinematic or dynamic constraints, for example to deal with complex driving scenarios and environments. Dynamic programming techniques are often employed for their ability to trace a global optimum even in the case of non-convex problems. However, the calculation model for trajectory generation must be very simple to ensure that it is carried out in real time.

Other known approaches are based on the connection of collision-free waypoints through connecting curves that belong to specific function classes, such as polynomial functions and clotoids. The restriction of the choice of the connecting curve to these classes is preferred to ensure fluidity and feasibility from the kinematic point of view, i.e. to ensure the possibility of implementing a vehicle maneuver for tracking the trajectory and to ensure that this maneuver is as fluid as possible, i.e. free from sudden changes of direction and lateral accelerations.

To address this problem, several procedures define the vehicle's trajectory in terms of curvature, by its direct correlation with the steering angle and lateral acceleration of the vehicle.

US 2002/059026 discloses a vehicle operation assist control system that upon detection of an obstacle determines an evasion path that may be defined as a curvature which changes as a sinusoidal mathematical function of the position of the vehicle along the path. DE 10 2008 016377 also discloses a method involving a double-lane change maneuver at detection of a threatening collision of a motor vehicle with an obstacle.

Known algorithms normally limit the operation of the vehicle so that it remains far from its maneuverability limits, since they are focused on optimizing comfort, consequently they do not take into account the limitations introduced by the dynamics of the vehicle and the tires thereof.

Furthermore, long calculation times are not desirable because they would result in ineffective delayed vehicle responses in the event of imminent collision situations when an unexpected obstacle appears or an obstacle is detected late, but close enough to the controlled vehicle that a rapid response would be necessary to avoid it.

However, in the case of imminent collision situations, when an unexpected obstacle appears close to the vehicle or an obstacle is detected close to the vehicle along the planned driving trajectory, the avoidance of the obstacle requires a rapid response which often requires a change in the lane of travel of the vehicle, i.e. the maneuvering of the vehicle from the current lane, which is assessed as unsafe, to another lane, such as the adjacent lane, which is free of obstacles.

Such emergency maneuvers are particularly critical for two reasons: they involve operating the vehicle close to its maneuverability limits and require a rapid lateral movement of the vehicle.

Generally, the maneuverability limits of a vehicle are determined by the available grip between the vehicle's tires and the road. Several studies have addressed the problem of estimating this characteristic. Knowing and exploiting the available grip between tires and road is of paramount importance for several reasons. In effect, the planning of trajectories that do not exploit the grip of the vehicle on the road to its limits could prevent the success of an obstacle avoidance maneuver. At the same time, generating maneuvers that exceed the grip limits may lead to dangerous vehicle instability.

Procedures for generating drive trajectories of a vehicle up to its limits of maneuverability have been developed primarily for the sports competition sector. In this case, however, the aim is to minimize the time needed to travel a distance instead of ensuring safe driving. These procedures do not normally involve lane changes.

Another problem in the implementation of emergency maneuvers for autonomous drive vehicles is the need to include the dynamic requirements of the vehicle in the trajectory generation stage. In effect, a kinematically feasible trajectory may not be dynamically feasible. The dynamic requirements are usually overlooked to make real-time calculations easier. One of the most common assumptions is to overlook the fact that the planned trajectory must be tracked by an electronic control module or closed loop trajectory tracking controller that has its own dynamic response. In the case of "normal" operation, this assumption is perfectly acceptable. However, when it comes to emergency maneuvers, where passenger comfort is not a priority, it is possible that the maneuver approaches the dynamic tracking limits, even if this is not comfortable for the passengers. The faster avoidance trajectory of an obstacle will necessarily reach the limits of the dynamics of the trajectory tracking control device. However, generating a path that the control device cannot dynamically track could lead to the failure of the whole process to avoid the obstacle.

In light of what is currently known in the art, the object of the present invention is to provide a satisfactory solution to the problem of generating collision-free trajectories in the event of emergency maneuvers, and in particular the object is to meet the following desirable requirements for the effective generation of an obstacle avoidance trajectory for a land vehicle driving along a planned path, i.e., in other terms, for the implementation of a method and a system for planning an emergency path:

- making the most of the grip limits between vehicle and road;
- calculating an obstacle avoidance trajectory quickly; and
- ensuring the feasibility of the tracking of the trajectory calculated from both a kinematic and a dynamic point of view.

According to the present invention, these objects are achieved by means of a method for the generation of an obstacle avoidance trajectory for a land vehicle traveling along a planned path having the characteristics claimed in claim 1.

Another subject-matter of the invention is a system for the generation of an obstacle avoidance trajectory for a land vehicle traveling along a planned path and a control method for an autonomous drive vehicle, as claimed.

Particular embodiments form the subject-matter of the dependent claims, the content of which is to be understood as an integral part of the present description.

The present invention describes a method for generating a trajectory for an obstacle avoidance maneuver in an emergency situation in the context of a planned path. The obstacle avoidance trajectory is generated with the aim of ensuring, when necessary, the fastest lane change (or, more generally, direction of travel, e.g. parallel directions) that is physically achievable by a control module of the vehicle's drive actuators for tracking the same avoidance trajectory.

The trajectory calculation algorithm is based on the knowledge of the position of the obstacle and the speed thereof, which are used to define an area of collision to be avoided by the controlled vehicle.

In short, the present invention is based on a succession of operative steps that include:

- verifying whether a current trajectory of the vehicle intersects the collision area correlated to a detected obstacle, whereby an avoidance maneuver must be carried out;
- verifying the possibility of avoiding the obstacle by calculating two trajectories, respectively a first trajectory of maximum displacement to the left and a second trajectory of maximum displacement to the right, in compliance with the limits of the roadway and the lateral dynamics of the vehicle; and
- selecting the best trajectory among those calculated in the previous step, i.e. among all the possible trajectories even with smaller displacement between the first trajectory of maximum left displacement and the second trajectory of maximum right displacement.

The selection of the best trajectory is performed by a trajectory tracking module of a vehicle control and processing system, which selects the maneuver with the least dynamic excitation among the lane change to the left, the lane change to the right or braking.

The performance of the vehicle dynamics control system is taken into account by introducing a limitation on the maximum bandwidth of the maneuver, imposing that the pattern of the (amplitude of the) curvature of the trajectory of the vehicle over time is sinusoidal or with sinusoidal sections and constant sections, i.e., it corresponds to a wave formed by sinusoidal harmonic components of frequencies lower than a predetermined maximum permissible frequency, selected to be lower than the maximum bandwidth (dynamic response) of the vehicle dynamics control system arranged for tracking the trajectory by actuating the vehicle drive actuators, i.e. propulsion system, steering system, braking system.

Possible variations in the position of the obstacle or the velocity thereof are taken into account by executing the algorithm of generation of the trajectory whenever it is determined that the current trajectory intersects the previously determined collision area.

Further characteristics and advantages of the invention will be described in greater detail in the following detailed description of an embodiment thereof, provided by way of non-limiting example, with reference to the accompanying drawings wherein:

Figure 1 is a schematic representation of a driving condition of a vehicle and of the interposition of an obstacle along the driving path of said vehicle;
Figure 2 is a block diagram of a system of the invention for the generation of a trajectory for the avoidance of obstacles;
Figure 3 shows a pair of diagrams representing an optimal lane change maneuver of the vehicle, in terms of lateral displacement and curvature over time;
Figure 4 shows two pairs of diagrams representing two respective feasible lane change maneuvers of the vehicle, in terms of lateral displacement and curvature over time;
Figure 5 shows a pair of diagrams representing an exemplifying lane change maneuver of the vehicle of a generic obstacle avoidance trajectory, in terms of lateral displacement and curvature over time;
Figure 6 shows a series of exemplifying obstacle avoidance trajectories;
Figure 7 shows a series of diagrams representing different excitations of a vehicle lane change maneuver, in terms of lateral displacement and lateral acceleration;
Figure 8 shows a series of diagrams representative of a re-planning of a vehicle lane change maneuver, in terms of lateral displacement, direction of travel and curvature in the longitudinal direction; and
Figures 9 and 10 show two examples of an obstacle avoidance trajectory generated according to the method of the present invention.

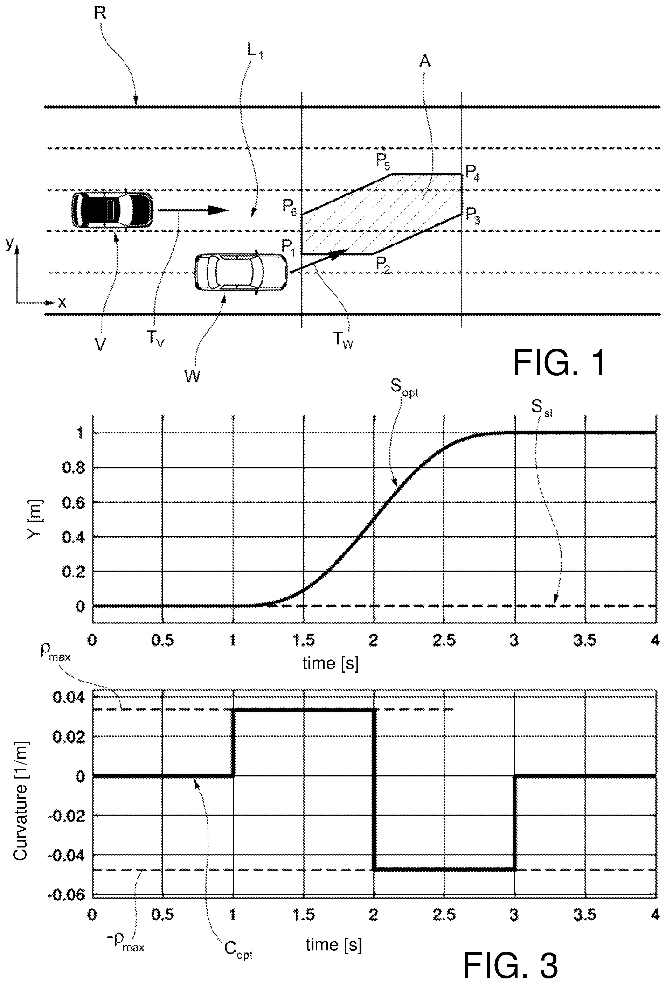

Figure 1 shows a roadway R traveled by a vehicle V along a central lane L1. The vehicle V may be either an assisted drive vehicle or an autonomous drive vehicle. A second vehicle W passes between the driving lanes in front of the vehicle V in the direction indicated by the arrow $T_W$, representing an obstacle along the planned path trajectory of the vehicle V, in the example case a straight path indicated by the arrow $T_V$.

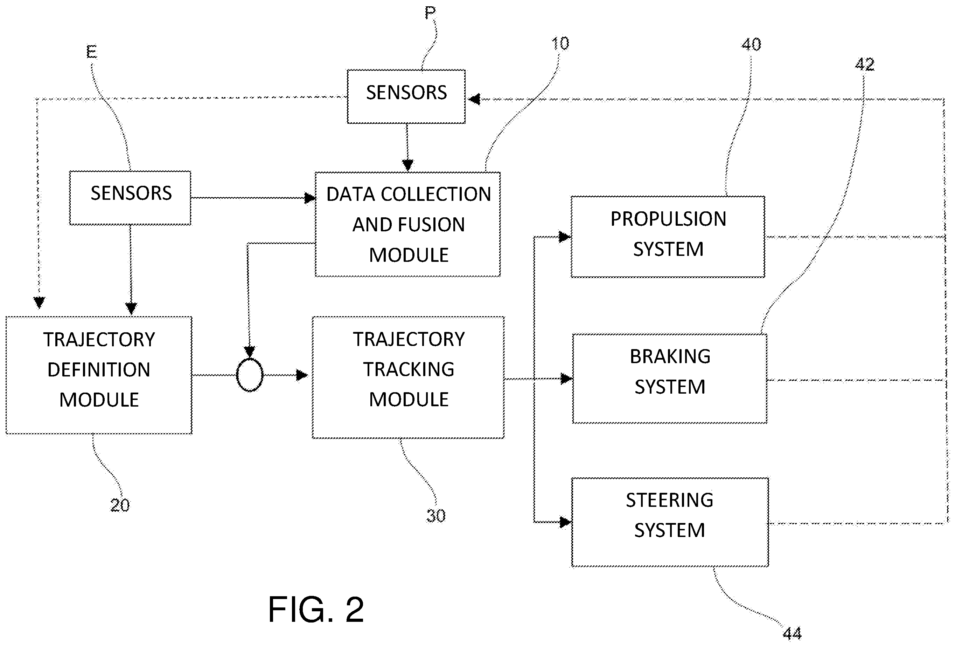

As shown schematically in Figure 2, the vehicle V is equipped with a satellite positioning device and a plurality of onboard sensors P, purely by way of example, sensors arranged to detect the position of the vehicle such as odometric sensors for detecting the speed of the wheels and inertial sensors for detecting accelerations and angular speeds, as well as laser sensors, video cameras, radar sensors and ultrasonic sensors or a combination, even partial, thereof (indicated collectively at E) arranged for the recognition of the environment around the vehicle through data fusion techniques. An onboard control and processing system comprises a data collection and fusion module 10 arranged to process the fusion of vehicle positioning data and data collected by the onboard sensors P, E in such a way as to recognize the position of the vehicle in real time relative to the roadway and to objects which occupy the same roadway in the vicinity of the vehicle and along the driving trajectory thereof, hereinafter collectively referred to as "obstacles". The data collection and fusion module 10 is adapted to emit a signal indicative of a data triad, respectively the X and Y coordinates of the actual current position of the vehicle and the angle $\psi$ of the actual current direction of the vehicle with respect to the roadway - hereinafter referred to as vehicle data - as well as one or more indicative signals of data vectors bearing the spatial coordinates, referring to the position of the vehicle V, representative of the shape of a respective detected obstacle, for example the spatial coordinates of important points such as the extreme points of the shape of the obstacle - hereinafter referred to as obstacle data.

The onboard control and processing system further comprises a trajectory definition module 20, arranged to calculate a local movement trajectory of the vehicle to achieve a path programmed by an onboard navigation system (or high-level trajectory, identified by the triad of the $X_0$ and $Y_0$ coordinates of the vehicle's programmed position and the angle $\psi_0$ of the vehicle's programmed direction) as a function of the environmental constraints (e.g. traffic conditions or obstacles) measured in real time. The trajectory definition module 20 is adapted to emit a signal indicating a data triad, i.e., the expected coordinates of the vehicle along a predetermined trajectory, $X_T(t)$ and $Y_T(t)$, variable over time, and the expected local forward direction, which also varies over time $\psi_T(t)$ relative to the roadway, respectively.

Finally, for the purposes of the invention, the onboard control and processing system includes a tracking module of the trajectory 30, adapted to emit control signals for the onboard drive actuators of the vehicle, such as the propulsion system 40 and the braking system 42 for longitudinal vehicle control, and the steering system 44 for lateral vehicle control - i.e., the directional control of the vehicle, based on the trajectory generated by the trajectory definition module 20.

For example, the trajectory definition module 20 may work under the assumption that the tracking module 30 ensures that the desired and actual position of the vehicle coincide. In this way, the trajectory definition module 20 only needs the current desired trajectory to define the future desired trajectory, and the data collected by the onboard sensors E that indicate the position of an obstacle in relative coordinates with respect to the vehicle. Optionally, the trajectory definition module may also receive in input vehicle positioning data from the onboard sensors P, which convey information on the absolute position of the vehicle.

In a method for controlling the travel of an assisted drive or autonomous drive vehicle, which comprises the mapping of a vehicle's driving environment and detection of obstacles in the aforesaid environment, the generation of a vehicle's drive trajectory and the tracking of the drive trajectory generated, the generation of the drive trajectory of the vehicle includes a method for the generation of an obstacle avoidance trajectory according to the invention, carried out by the onboard control and processing system of the vehicle V.

The method for the generation of an obstacle avoidance trajectory according to the invention comprises:

- a collision check stage: verification of whether a current trajectory of the vehicle intersects a collision area correlated with a detected obstacle, whereby an avoidance maneuver must be carried out.
- an obstacle avoidance feasibility verification stage: verification of the possibility of avoiding the obstacle by calculating two trajectories, respectively a first trajectory of maximum displacement to the left and a second trajectory of maximum displacement to the right, in compliance with the limits of the roadway and the lateral dynamics of the vehicle. It should be noted that although the lateral displacement to the limit of what is possible is usually not necessary, at this stage the system must verify the feasibility of the maneuver, and therefore it is useful for it to calculate trajectories of maximum lateral displacement.
- a maneuver selection stage: the selection of the best trajectory, and therefore the best type of maneuver, among those calculated in the previous step, i.e., among all the possible trajectories even with lower displacement between the first trajectory of maximum displacement to the left and the second trajectory of maximum displacement to the right.

As a whole, the method for generating an obstacle avoidance trajectory according to the invention is implemented by a plurality of processing modules, which run a computer program or a group of programs, which are arranged to perform the functions and calculations that will be described in detail below.

## Collision check

The method for generating the obstacle avoidance trajectory is triggered by the detection of an obstacle, by means of any obstacle detection and positioning algorithm known in the art. When an obstacle is detected, its position and speed are determined, and its length and width are estimated from its classification or category to which it belongs, which constitute the data relating to the obstacle. Initially, the speed of the obstacle is assumed to be constant, however, a method of re-planning the trajectory may be implemented in the event of significant changes in the state of the obstacle, as will be described below.

The obstacle data and the vehicle data and the quantities derived therefrom, i.e., along the longitudinal forward direction, the distance of the obstacle from the vehicle, and along the transverse direction, the distances of the vehicle and the obstacle from the edges of the carriageway R, as well as the direction and speed of travel of the vehicle, are used to calculate a region A, called "collision area", wherein a collision between the vehicle V and the obstacle W is possible. Figure 1 shows the collision area A if the vehicle W enters the roadway R traveled by vehicle V from the right (relative to the direction of travel of the vehicle V).

The collision area begins at a section of the roadway R wherein the front side of the controlled vehicle V and the rear side of the obstacle W would have the same position, as a function of the initial positions (at the moment of obstacle detection) of the vehicle and the obstacle and their relative speed. This value, indicated as $s_{c,start}$, is calculated simply from the linear motion equations, according to the expression:

$$s_{c,start} = V_{x,ego} \frac{s_{obs} - L_{obs}}{V_{x,ego} - V_{x,obs}}$$

where $s_{obs}$ is the distance between the front side of the obstacle W and the front side of the controlled vehicle V and $L_{obs}$ is the length of the obstacle, while $V_{x,ego}$ and $V_{x,obs}$ are the longitudinal speeds of the controlled vehicle and of the obstacle, respectively.

The end of the collision area A, indicated as $s_{c,end}$, is calculated at a section of the roadway R wherein the rear side of the vehicle V and the front side of the obstacle W would have the same position, always in relation to the relative speed thereof, according to the expression:

$$s_{c,end} = V_{x,ego} \frac{s_{obs} + L_{ego}}{V_{x,ego} - V_{x,obs}}$$

The collision area A is defined as the space occupied by the obstacle between these extremes.

If the lateral speed of the obstacle is oriented towards the left side of the roadway, referring to its direction of travel, the polygon that describes the collision area A is characterized by the following vertices:

$$P_1 = \left( s_{c,start}, y_{obs,start} - \frac{W_{obs}}{2} \right);$$

$$P_2 = \left( s_{c,start} + L_{obs}, y_{obs,start} - \frac{W_{obs}}{2} \right);$$

$$P_3 = \left( s_{c,end}, y_{obs,end} - \frac{W_{obs}}{2} \right);$$

$$P_4 = \left( s_{c,end}, y_{obs,end} + \frac{W_{obs}}{2} \right);$$

$$P_5 = \left( s_{c,end} - L_{obs}, y_{obs,end} + \frac{W_{obs}}{2} \right);$$

$$P_6 = \left( s_{c,start}, y_{obs,start} + \frac{W_{obs}}{2} \right);$$

Otherwise, if the lateral speed of the obstacle is oriented towards the right side of the roadway, referring to its direction of travel, the expressions of vertices are as follows:

$$P_1 = \left( s_{c,start}, y_{obs,start} - \frac{W_{obs}}{2} \right);$$

$$P_2 = \left( s_{c,end} - L_{obs}, y_{obs,end} - \frac{W_{obs}}{2} \right);$$

$$P_3 = \left( s_{c,end}, y_{obs,end} - \frac{W_{obs}}{2} \right);$$

$$P_4 = \left( s_{c,end} , y_{obs,end} + \frac{W_{obs}}{2} \right);$$

$$P_5 = \left( s_{c,start} + L_{obs} , y_{obs,start} + \frac{W_{obs}}{2} \right);$$

$$P_6 = \left( s_{c,start} , y_{obs,start} + \frac{W_{obs}}{2} \right);$$

In the previous expressions $W_{obs}$ denotes the width of the obstacle, while $y_{obs,start}$ and $y_{obs,end}$ indicate the lateral position of the obstacle at the beginning of the collision area and at the end of the collision area, calculated knowing the lateral speed of the obstacle $V_{y,obs}$ and considering the lateral position of the controlled vehicle as a reference point.

The collision area is calculated whenever an obstacle is detected by the onboard control and processing system of the vehicle V and is continuously updated as long as the obstacle W is within the range of the trajectory of the vehicle V. The collision area A therefore represents the region of the roadway along the drive trajectory to be avoided by the vehicle V.

**Calculation of extreme trajectories and verification of the feasibility of avoiding an obstacle**

After the collision check, it is determined whether the detected obstacle may be avoided.

In this stage, the obstacle avoidance trajectories are calculated, which are compatible with the constraints that guarantee the fastest lateral movement of the vehicle, and it is verified whether they still intersect with the collision area.

It is known that if the only constraint considered is the maximum lateral acceleration (which depends essentially on the grip limits of the tires), the path at constant speed (avoidance trajectory) that minimizes the longitudinal distance necessary to move the vehicle laterally by a given distance is composed of two circular arcs of minimum curvature radius, i.e. the maximum lateral acceleration corresponds to the maximum curvature of the trajectory, as shown in Figure 3.

Figure 3 shows a pair of diagrams representing an optimal lane change maneuver of the vehicle, in terms of lateral displacement and curvature of the trajectory over time. The upper diagram illustrates the pattern over time of the transverse position of the vehicle (or transverse displacement of the vehicle) on the roadway, represented by the continuous line curve $S_{opt}$ indicative of the optimal lane change, which breaks away from the dashed line curve $S_{sl}$ indicative of the lane from which the maneuver begins. The lower diagram illustrates the pattern over time of the curvature of the avoidance trajectory represented in the upper diagram that the vehicle may travel, which is a square wave $C_{opt}$ contained between an upper extreme $\rho_{max}$ of maximum positive curvature and a lower extreme $-\rho_{max}$ of maximum negative curvature.

The optimal maneuver shown in Figure 3 is not achievable by an actual control algorithm of the vehicle V, as it would be impossible to perfectly track a square wave curvature. Therefore, the trajectory must be modified to take into account the dynamic limits of the vehicle, of the maneuver actuators of the vehicle (e.g. steering system) and of an electronic control module or tracking controller of the trajectory.

The simplest and most efficient way to quantify the dynamic constraints mentioned above (i.e. the dynamic constraints of the vehicle, of the vehicle maneuver actuators and of the tracking controller of the trajectory) is to specify a closed loop bandwidth, i.e., the maximum frequency at which the vehicle may track a reference signal, i.e., at which the control system guarantees a distortion-free tracking of the reference signal, which is the calculated trajectory.

The present invention makes use of this concept to generate an obstacle avoidance trajectory which has a curvature the spectrum of which has a maximum frequency lower than the bandwidth of the electronic tracking control module of the trajectory.

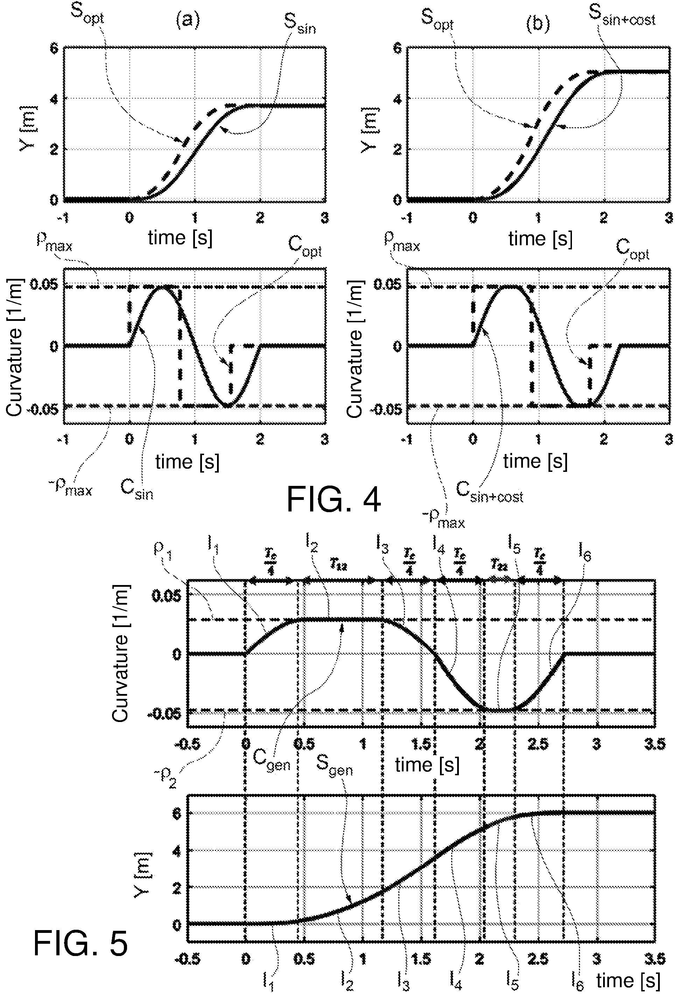

Generating trajectories that meet this requirement is extremely simple when the curvature is sinusoidal. Figure 4 shows two examples of the generation of an obstacle avoidance trajectory based on a sinusoidal curvature (function), which may be defined as the curvature signal that the trajectory tracking module uses as a reference to control the steering system. Specifically, Figure 4 shows two pairs of diagrams representing two respective feasible lane change maneuvers of the vehicle, in terms of lateral displacement and curvature over time. The graphs on the left (graphs a) represent the pattern over time of lateral displacement $S_{sin}$ and curvature $C_{sin}$ of an obstacle avoidance trajectory, where the pattern over time of the curvature $C_{sin}$ is purely sinusoidal, namely a sinusoid period with maximum curvature amplitude, contained between an upper extreme $\rho_{max}$ of maximum positive curvature and a lower extreme $-\rho_{max}$ of maximum negative curvature. The lateral displacement $S_{opt}$ and the curvature $C_{opt}$ shown in Figure 3 are indicated as a reference with a dashed line. By way of example, the sinusoid period is set to 2 seconds, which means that it is accepted by the electronic trajectory tracking control module (which governs the actuation of the vehicle steering system, i.e., the lateral control of the vehicle, e.g. by means of a signal indicating a steering angle required to correct the direction of travel of the vehicle in such a way that the trajectory may be tracked) a maximum excitation frequency of 0.5 Hz. With this configuration, the lateral displacement obtainable is about 3.7 m and represents the fastest lane change achievable by the controller with a 0.5 Hz bandwidth.

If a lower lateral displacement is required, the amplitude of the sinusoid may be decreased. In principle, the sinusoid period may also be reduced, but this would make the trajectory generated unsuitable for the actuation of the control. In effect, if the period is reduced, the frequency is increased and exits from the band allowed for the control, i.e., from that which the controller is able to track.

Conversely, if greater lateral displacement is required, the maximum curvature should be kept constant over a period of time, i.e., a constant curvature section should be added to the maximum curvature, as shown in the graphs on the left (graphs b). These graphs represent the pattern over time of lateral displacement $S_{sin+cost}$ and curvature $C_{sin+cost}$ of an obstacle avoidance trajectory, where the pattern over time of the curvature $C_{sin+cost}$ is sinusoidal and constant in intermediate sections at the upper extreme $\rho_{max}$ of maximum positive curvature and at the lower extreme $-\rho_{max}$ of maximum negative curvature of the sinusoid. The lateral displacement $S_{opt}$ and the curvature $C_{opt}$ shown in Figure 3 are indicated as a reference with a dashed line.

The approach described above may also be applied in turning maneuvers. In this case the initial curvature is not null, and therefore an extreme limit of the curvature is closer than the other.

More generally, the obstacle avoidance trajectory may be generated by considering different amplitudes of the positive sinusoidal half-wave and the negative sinusoidal half-wave of the curvature (respectively corresponding to the steering to the left and to the right), adding the lateral displacement determined for the generation of an obstacle avoidance trajectory to the original one of a steering maneuver anticipated for tracking a planned path.

A lane change maneuver of the vehicle having a structure exemplifying a generic obstacle avoidance trajectory is shown in Figure 5. The upper diagram illustrates the pattern over time of the curvature of the avoidance trajectory represented in the lower diagram that the vehicle may travel, which is a composite wave $C_{gen}$ contained between an upper extreme $\rho_1$ of maximum positive curvature and a lower extreme $-\rho_2$ of maximum negative curvature ($|\rho_1| \neq |\rho_2|$), including sinusoidal sections and constant sections. The lower diagram illustrates the pattern over time of the displacement of the vehicle on the roadway, represented by the continuous line curve $S_{gen}$.

Starting from the time t = 0 at the beginning of the obstacle avoidance maneuver, there are successive maneuvering intervals $I_1$-$I_6$, the duration of which is respectively equal to $T_c/4$, $T_{12}$, $T_c/4$, $T_c/4$, $T_{22}$ and $T_c/4$, where $T_c$ is the period - constant - of the sinusoid characterizing the curvature according to the invention (although it is also possible to consider sinusoid sections characterizing the curvature of different periods). Since $|\rho_1| \neq |\rho_2|$ and the amplitude of the sinusoid is by definition dependent on $\rho_1$ and $\rho_2$ (since the maximum values of $\rho_1$ and $\rho_2$ depend on the maximum lateral acceleration sustainable by the vehicle, also taking into account that the vehicle may already be turning), the sinusoidal sections $I_1$, $I_3$ have a pattern (local slope) different from the sinusoidal sections $I_4$, $I_6$. Each of the sinusoidal half-waves is interrupted, in a symmetrical interval around its (maximum, minimum) extreme, by sections $I_2$ and $I_5$ with constant curvature, equal to the maximum value ($\rho_1$, $\rho_2$) of the permitted curvature. The definition of different curvature maximums stems from the fact that the limits of curvature to the left and right may be different. The most frequent (and realistic) case occurs when the avoidance trajectory is generated from an already curved trajectory. In this case, if one is working in an additive way with respect to the driving trajectory, the maximum curvature limit to the right and to the left is necessarily different.

Mathematically, the obstacle avoidance trajectory having the characteristics represented in Figure 5 may be described by solving the following equations:

$$\rho(t) = \begin{cases} \rho_1 sin\left(\dfrac{2\pi}{T_c}t\right) & \text{if } t \in \left[0, \dfrac{T_c}{4}\right] \\[2mm] \rho_1 & \text{if } t \in \left[\dfrac{T_c}{4}, \dfrac{T_c}{4} + T_{12}\right] \\[2mm] \rho_1 cos\left(\dfrac{2\pi}{T_c}\left(t - \dfrac{T_c}{4} - T_{12}\right)\right) & \text{if } t \in \left[\dfrac{T_c}{4} + T_{12}, \dfrac{T_c}{2} + T_{12}\right] \\[2mm] -\rho_2 sin\left(\dfrac{2\pi}{T_c}\left(t - \dfrac{T_c}{2} + T_{12}\right)\right) & \text{if } t \in \left[\dfrac{T_c}{2} + T_{12}, \dfrac{3T_c}{4} + T_{12}\right] \\[2mm] \rho_2 & \text{if } t \in \left[\dfrac{3T_c}{4} + T_{12}, \dfrac{3T_c}{4} + T_{12} + T_{22}\right] \\[2mm] -\rho_2 cos\left(\dfrac{2\pi}{T_c}\left(t - \dfrac{T_c}{4} - T_{12}\right)\right) & \text{if } t \in \left[\dfrac{3T_c}{4} + T_{12} + T_{22}, T_c + T_{12} + T_{22}\right] \end{cases}$$

where $T_c$ is the period of the sinusoid, $T_{12}$ and $T_{22}$ are the duration of the strokes with constant curvature, $\rho_1$ is the amplitude of the curvature of the first wave and $\rho_2$ is the amplitude of the curvature of the second wave.

The instantaneous direction of the vehicle and the lateral displacement from the original trajectory are obtained by integrating the previous expression:

$$\psi(t) = \int_0^{t_{end}} V\rho(t)dt$$

$$y(t) = \int_0^{t_{end}} V\psi(t)dt$$

where V is the module of the speed of the vehicle and $t_{end}$ is the total maneuvering time, which is the sum of a sinusoid period and of the two sections with constant curvature.

The above equation may be solved in its four unknowns ($\rho_1$, $\rho_2$, $T_{12}$, $T_{22}$) by imposing the following final conditions on the direction and lateral displacement:

$$\psi(t_{end}) = V\left(\rho_1\frac{T_c}{\pi} + \rho_1 T_{12} - \rho_2\frac{T_c}{\pi} - \rho_2 T_{22}\right) = 0$$

$$y(t_{end}) = V^2\left(\frac{T_c^2}{4\pi}(\rho_1 + \rho_2) + \frac{1}{2}(\rho_1 T_{12}^2 + \rho_2 T_{22}^2) + T_c\left(\frac{1}{4} + \frac{1}{2\pi}\right)(\rho_1 T_{12} + \rho_2 T_{22})\right) = y_{shift}$$

The following cases are given:

1. Both sections with constant curvature are necessary to achieve the desired lateral displacement, i.e. $T_{12} > 0$ and $T_{22} > 0$, whereby both half-waves of the curvature reach the maximum curvatures. In this case, the amplitudes of the curvature assume their maximum values, i.e. $\rho_1 = \rho_{1,max}$ and $\rho_2 = \rho_{2,max}$. Therefore, only $T_{12}$ e $T_{22}$ are unknown.
2. Only one half-wave of the curvature reaches the maximum curvature value, the other half-wave is purely sinusoidal. This is only possible when the curvature limits to the left and to the right are different, i.e. when driving in a turn. If $\rho_{1,max} > \rho_{2,max}$, then $T_{12} = 0$ and $\rho_2 = \rho_{2,max}$. Therefore, only $\rho_{1,max}$ and $T_{22}$ are unknown. Conversely, if $\rho_{2,max} > \rho_{1,max}$, then $T_{22} = 0$ and $\rho_1 = \rho_{1,max}$. Therefore, only $\rho_{2,max}$ and $T_{12}$ are unknown.
3. Both half-waves of the curvature do not reach the maximum curvatures. This is the case of lower lateral displacements. Since the limits are not reached, constant curvature sections are not necessary. The equation of the direction implies that the two half-waves of the curvature have the same amplitude $\rho_1 = \rho_2 = \rho$, while the equation of the lateral displacement is used to determine the value thereof.

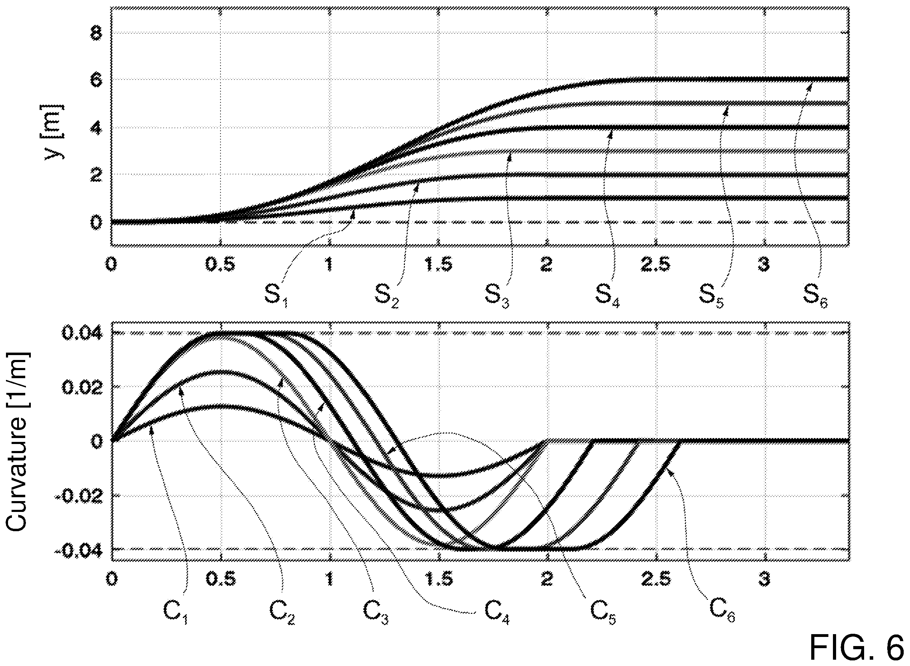

Figure 6 shows a plurality of exemplifying trajectories for avoiding an obstacle, obtained with different final lateral displacements, considering a maximum lateral acceleration of 0.5g and $T_c = 0.5s$. In detail, Figure 6 shows a pair of diagrams representing said plurality of exemplifying trajectories for avoiding an obstacle, in terms of lateral displacement and curvature of the trajectories over time. The upper diagram illustrates the pattern over time of the transverse position of the vehicle on the roadway in six different maneuvering conditions, represented by the curves $S_1$-$S_6$ indicating respectively a transverse displacement of the entity of 1m, 2m, 3m, 4m, 5m and 6m, which - depending on the entity - may lead to a change of lane or several lanes. The lower diagram illustrates the pattern over time of the curvature of the avoidance trajectories represented in the upper diagram that may be traveled by the vehicle, which are purely sinusoidal waves $C_1$-$C_3$ or composite waves $C_4$-$C_6$, contained between an upper extreme of maximum positive curvature and a lower extreme of maximum negative curvature, here purely by way of example equal in absolute value (equal to 0.04m$^{-1}$).

The above as disclosed with reference to a lane change maneuver to the left according to the direction of travel of the vehicle may be applied in a similar manner for a lane change maneuver to the right. In this case, the sinusoidal curvature will initially have a negative half-wave, followed by a positive half-wave.

In short, the trajectory definition module is arranged to generate two possible extreme maneuvers in this stage, respectively a maximum displacement maneuver to the left and a maximum displacement maneuver to the right.

The verification of the feasibility of avoiding an obstacle, i.e. verifying whether the calculated extreme trajectories still intersect the collision area, is carried out by reapplying the first stage of calculating the collision area and determining the collision trajectories, starting from the next stage.

**Selecting the maneuver, checking the feasibility of avoiding the obstacle and updating the trajectory**

After the calculation stage of the extreme trajectories, the trajectory definition module selects the best type of maneuver from the extreme maneuvers calculated at the previous step, verifying the feasibility of the obstacle avoidance by this type of maneuver.

This operation may be carried out on the basis of many different factors, which therefore constitute a variable parameter for programming the onboard control and processing system, for example, depending on the intended use of the vehicle equipped with this system: the surrounding environment, passenger comfort, etc. It will be clear to a person skilled in the art that the programming of the control system may be implemented only once when setting up the system before it is installed on the vehicle or may be selected by a vehicle user, depending on the needs.

In general, in this stage it is verified whether the maximum displacements to the left and to the right calculated in the previous stage are sufficient to avoid the obstacle and remain on the carriageway or roadway the limits or transverse dimension of which are therefore introduced in this stage). Thus, several cases may be given:

1) A maneuver of maximum displacement to the left does not allow the obstacle to be avoided. The obstacle is considered unavoidable and it is verified whether it may be avoided by a maximum displacement maneuver to the right. If even in this case the obstacle is unavoidable, the system in the currently preferred embodiment is programmed to brake in order to minimize the impact speed.

2) If the maximum displacement maneuver to the left allows the obstacle to be avoided, but the trajectory thus calculated leads off of the carriageway, the system reduces the maneuver until it remains on the carriageway. If this maneuver with the maximum displacement compatible with the limits of the carriageway also leads to hitting the obstacle, the obstacle is considered unavoidable, and it is verified whether it may be avoided by a similar maneuver of displacement to the right.

After conducting a feasibility analysis of at least one obstacle avoidance maneuver, as described in the previous paragraph (essentially taking into account the size and positions of the obstacle and the size of the carriageway) a maneuver is selected between the possible maneuvers on the basis of a predefined criterion. The selection criteria could be:

1) passenger comfort;

2) any considerations of robustness (if curvature maneuvers to the left and to the right are both feasible, and the curvature maneuver to the left involves invading the lane of opposite direction of travel and the system checks for the existence of a horizontal signage with a contrary norm indication (for example, a continuous center line) then it is preferable to turn to the right, to comply with the traffic code.

In this embodiment the focus is on processing the considerations relating to the limits or constraints of maneuvering. A currently preferred selection criterion is related to the width of the lateral displacement, and specifically the maneuver with the smallest lateral displacement is selected.

The feasibility check of the obstacle avoidance is carried out at the previous step for the two scenarios wherein the displacement of the vehicle is simulated as far to the left and to the right as possible. In general, under most real-world conditions, this is not necessary and therefore the excitation of the chosen maneuver may be reduced. This is done in two steps: first, the lateral displacement is set to the minimum to prevent the vehicle V from intersecting the collision area A in its travel, with a safety distance tolerance, therefore the period of the sinusoid is increased (at discrete steps, preferably with a lateral displacement step equal to half the width of the vehicle) as a function of the section of the roadway at the beginning of the collision area.

For these steps it is necessary to know the coordinates of the vertices of the collision area A, represented in Figure 1. First an obstacle W is considered that crosses the roadway from right to left, as shown in Figure 1. The vehicle V may avoid the collision area by steering to the right or to the left. In the case of a steering maneuver to the right the necessary lateral displacement $y_{sh,right}$, depends on the common Y coordinate of the extreme $P_1$, and is determined by the following expression:

$$y_{sh,right} = y_{obs,start} - \frac{W_{obs}}{2} - \frac{W_{ego}}{2} - y_{safe}$$

where $W_{ego}$ is the width of the vehicle V, while $y_{safe}$ is a predetermined positive parameter that represents the safety distance that one wishes to maintain with respect to the obstacle.

Similarly, if a steering maneuver to the left is performed, the necessary lateral displacement $y_{sh,left}$ depends on the common Y coordinate of the extreme $P_5$, and is determined by the following expression:

$$y_{sh,left} = y_{obs,start} + \frac{W_{obs}}{2} + \frac{W_{ego}}{2} + y_{safe}$$

Similarly, if the obstacle W moves from left to right, the lateral displacement may be calculated in a similar way considering the vertices $P_2$ and $P_6$.

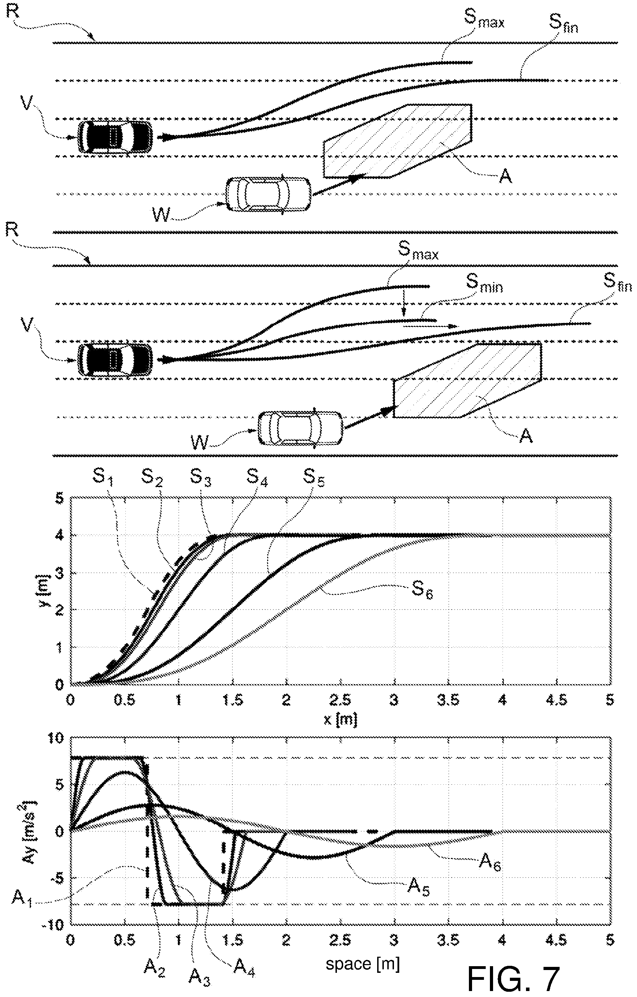

The setting of the period of the curvature sinusoid is used to further reduce the excitation of the maneuver, as a longer period will result in lower lateral acceleration. The period of the curvature sinusoid is chosen as the longest period that still guarantees a trajectory of avoidance of the obstacle without collision. This is shown in Figure 7. The upper diagram shows a limit avoidance trajectory (i.e., maximum displacement, in this case to the left) $S_{max}$, calculated at the previous stage, and a final trajectory $S_{fin}$ that allows the avoidance of the obstacle although with a lower lateral acceleration excitation. The second diagram from above shows an example of how the excitation of the obstacle avoidance maneuver may be reduced, i.e. the lateral acceleration, by first generating - starting from the limit trajectory $S_{max}$ - a trajectory $S_{min}$ with the minimum lateral displacement to avoid the collision area A, thus increasing the sinusoid period of the curvature to reach a displacement maneuver $S_{fin}$ with a longer and less excited trajectory, i.e. with minimum lateral acceleration. Finally, the last two diagrams show a comparison between an (upper) diagram of the lateral displacements and a (lower) diagram of the corresponding lateral accelerations. Specifically, the third diagram illustrates the pattern over time of the transverse position of the vehicle on the roadway under six different maneuvering conditions, represented by the curves $S_1$-$S_6$ indicating respectively an ideal transverse displacement and transverse displacements corresponding to a maneuver with sinusoidal curvature of period $T_c$ equal to 0.5s, 1s, 2s, 3s, 4s respectively. The fourth diagram illustrates the pattern of lateral acceleration for the avoidance trajectories represented in the upper diagram that may be traveled by the vehicle, which are respectively a square wave $A_1$, composite waves with steep sinusoidal rising and falling edges and plateaus with constant acceleration $A_2$ and $A_3$, purely sinusoidal waves $A_4$-$A_6$.

In the case wherein both lateral displacements are not feasible, because the extreme displacement trajectories do not allow to avoid intersecting the collision area, the simple braking of the vehicle V is considered. To ensure that collisions with obstacle W are avoided, the controlled vehicle V should brake at least until it reaches the longitudinal speed of the obstacle.

The following expressions are used to calculate the required braking time $t_{brake}$:

$$s_{ego}(t_{brake}) = \frac{\left(V_{x,ego0}^2 - V_{obs}^2\right)}{2a_{brake}}$$

$$s_{obs}(t_{brake}) = s_{obs} - L_{obs} + V_{x,obs}\frac{V_{x,ego0} - V_{x,obs}}{a_{brake}}$$

where $a_{brake}$ is the deceleration set for the vehicle V by the braking maneuver, $V_{x,ego0}$ is the longitudinal speed of the controlled vehicle V at the time of beginning of the braking maneuver, $s_{ego}(t_{brake})$ the longitudinal position on the roadway reached by the controlled vehicle V in the braking maneuver after the braking time $t_{brake}$ and $s_{obs}(t_{brake})$ the longitudinal position on the roadway reached by the obstacle W after the braking time $t_{brake}$.

If $s_{ego}(t_{brake}) < s_{obs}(t_{brake})$ then braking is an appropriate maneuver to avoid collision.

**Re-planning of the obstacle avoidance trajectory**

The algorithm described in the previous discussion is arranged to calculate a maneuver for avoiding an obstacle assuming that the states of the obstacle are perfectly known, i.e., the obstacle is stationary, or its speed is constant.

However, it may happen that the obstacle varies its movement (varies its position, initially fixed, or varies its speed) while the controlled vehicle is performing an avoidance maneuver. In this case the collision area varies over time, it will be different from the initial area and it may happen that the generated trajectory and the relative displacement maneuver, initially adequate, pass through a new collision area.

The data collection and fusion module periodically maps the environment and detects obstacles, for example at a frequency of 100 Hz. Whenever the sensors recognize a new obstacle, or an obstacle previously identified changes direction and/or speed, a collision check is carried out. When a possible collision is detected along a previously set obstacle avoidance trajectory, the trajectory definition module is again activated to generate an updated obstacle avoidance trajectory.

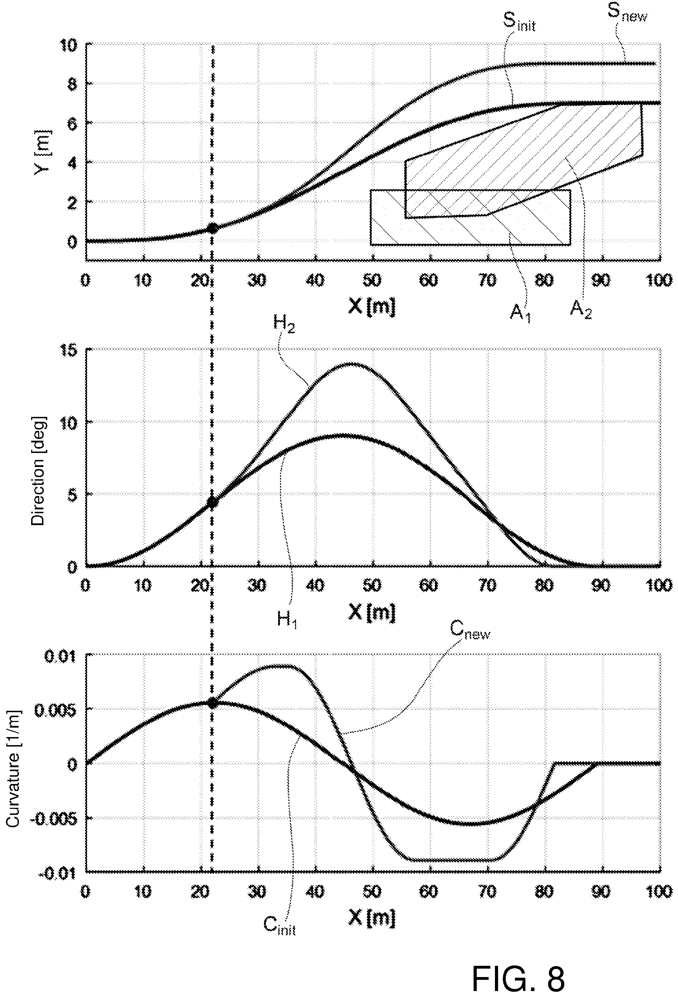

Unlike the first generation of an obstacle avoidance trajectory, which could originate from a straight line trajectory of the vehicle, a re-generation of an updated obstacle avoidance trajectory (re-planning) must necessarily take into account non-null initial conditions of the curvature, the direction of travel of the vehicle (which certainly has a transverse component) and the lateral displacement of the vehicle on the carriageway, as shown in Figure 8.

The upper diagram illustrates the pattern in the longitudinal direction X of the displacement of the vehicle on the roadway, represented by the continuous line curve $S_{new}$ indicative of the re-planned displacement, which departs from the curve $S_{init}$ indicative of the planned displacement at the previous generation of the trajectory for avoiding the obstacle. The same diagram shows, for an immediate visual understanding of the maneuver, a collision area $A_1$ initially determined and a collision area $A_2$ updated due to changes in the state of the obstacle. The intermediate diagram shows the pattern in the longitudinal direction of the local direction of travel of the vehicle relative to the initial longitudinal direction taken as a reference. Two curves are represented, respectively, a first curve of the direction of travel $H_1$ according to the first avoidance trajectory of the generated obstacle, and a second curve of the direction of travel $H_2$ according to the updated obstacle avoidance trajectory. The lower diagram shows the pattern in the longitudinal direction of the curvature of the avoidance trajectory represented in the upper diagram that the vehicle may travel. The pattern of the initial curvature $C_{init}$, purely sinusoidal, is transformed into a composite pattern $C_{new}$ including sinusoidal sections and constant sections.

The equations used to determine the avoidance trajectory of the updated obstacle, mentioned above, are modified as follows:

$$\rho(t) = \begin{cases} (\rho_1 - \rho_0)\sin\left(\frac{2\pi}{T_c}t\right) + \rho_0 & \text{if } t \in \left[0, \frac{T_c}{4}\right] \\ \rho_1 & \text{if } t \in \left[\frac{T_c}{4}, \frac{T_c}{4} + T_{12}\right] \\ \rho_1\cos\left(\frac{2\pi}{T_c}\left(t - \frac{T_c}{4} - T_{12}\right)\right) & \text{if } t \in \left[\frac{T_c}{4} + T_{12}, \frac{T_c}{2} + T_{12}\right] \\ -\rho_2\sin\left(\frac{2\pi}{T_c}\left(t - \frac{T_c}{2} + T_{12}\right)\right) & \text{if } t \in \left[\frac{T_c}{2} + T_{12}, \frac{3T_c}{4} + T_{12}\right] \\ \rho_2 & \text{if } t \in \left[\frac{3T_c}{4} + T_{12}, \frac{3T_c}{4} + T_{12} + T_{22}\right] \\ -\rho_2\cos\left(\frac{2\pi}{T_c}\left(t - \frac{T_c}{4} - T_{12}\right)\right) & \text{if } t \in \left[\frac{3T_c}{4} + T_{12} + T_{22}, T_c + T_{12} + T_{22}\right] \end{cases}$$

$$\psi(t) = \int V\rho(t)dt + \psi_0$$

$$y(t) = \int V\psi(t)dt + y_0$$

and the final conditions imposed are:

$$\psi(t_{end}) = \psi_0 + V\left(\frac{T_c}{\pi}(\rho_1 - \rho_2) + \rho_1 T_{12} - \rho_2 T_{22} + \frac{T_c}{2}\rho_0\left(\frac{1}{2} - \frac{1}{\pi}\right)\right)$$

$$y(t_{end}) = y_0 + V^2\left[\frac{1}{2}(T_{12}^2\rho_1 - T_{22}^2\rho_2) + \frac{7}{32}\rho_0 T_c^2 + \frac{\psi_0}{V_x}(T_{12} + T_{22} + T_c) + T_{12}T_{22}\rho_1 + \frac{1}{4}T_{12}T_c\rho_0 \right.$$

$$+ \frac{3}{4}T_{12}T_c\rho_1 + \frac{1}{4}T_{22}T_c\rho_0 - \frac{1}{4}T_{22}T_c\rho_2 + \frac{T_c^2}{2\pi}\left(-\rho_0 + \frac{3}{2}\rho_1 + \frac{1}{2\pi}\rho_0 - \frac{1}{2}\rho_2\right)$$

$$\left. + \frac{T_c}{2\pi}(-\rho_0 T_{12} - \rho_0 T_{22} + \rho_1 T_{22} + 2\rho_1 T_{22} - \rho_2 T_{22})\right]$$

where

$$\psi(t_{end}) = 0$$

$$y(t_{end}) = y_{shift}$$

**Examples**

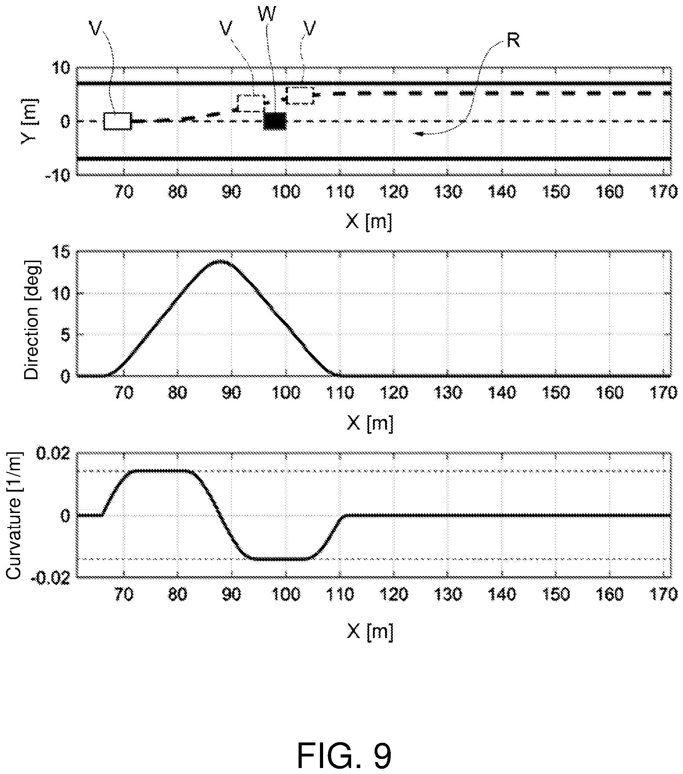

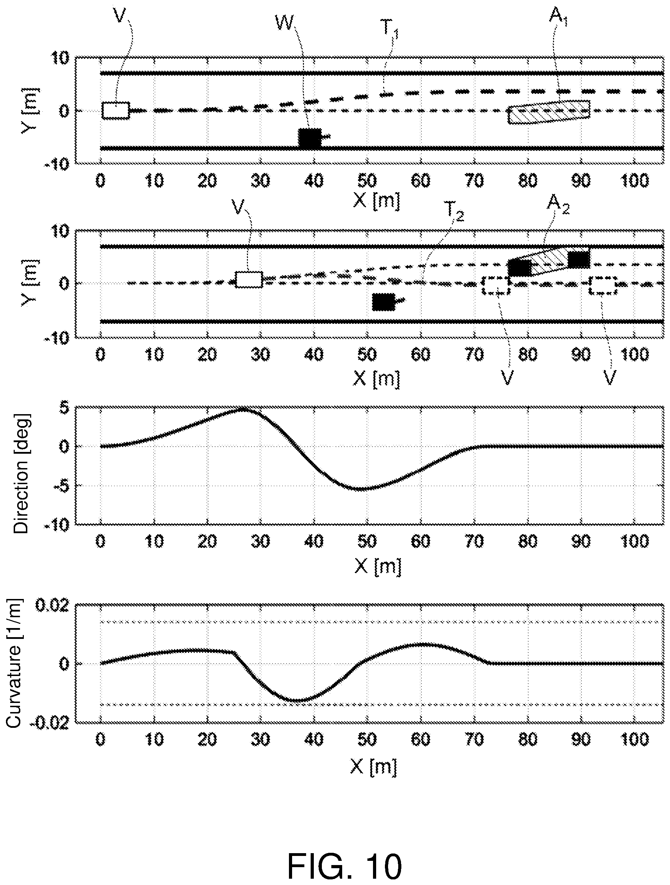

Figures 9 and 10 show two examples of an obstacle avoidance trajectory generated according to the method of the present invention.

Figure 9 shows the behavior of a vehicle V for the avoidance of an obstacle W represented as a stationary object in front of the vehicle, detected late at a distance of 25m from the arriving vehicle V. In this case, the controlled vehicle V is commanded to move to the left limit of the carriageway R and the sinusoid period is minimal. A smaller displacement would not have been adequate to avoid the obstacle, and even the complete braking would not have prevented the collision. The curvature of the avoidance trajectory generated is not purely sinusoidal, but composite, with constant curvature sections.

Figure 10, on the other hand, shows the condition wherein a vehicle W enters from the right of the controlled vehicle V at a constant speed of 50 km/h. The incoming vehicle represents an obstacle for the vehicle V and varies its speed when the avoidance maneuver has already been set. The upper graph shows a first trajectory $T_1$ of the lane change planned to avoid the obstacle, referring to the collision area $A_1$ calculated at the time of first detection of the obstacle, therefore on the basis of the status of the obstacle (position and speed) detected on that occasion. The second graph shows the state of the vehicle V and the obstacle W when the latter changes its speed. The collision area changes (the new collision area is indicated at $A_2$ in the figure) and now the first planned trajectory $T_1$ intersects it, so the trajectory generation module is again activated and an updated trajectory $T_2$ is generated.

It is interesting to note how the knowledge of the lateral speed of the obstacle is fundamental for the planning of the avoidance trajectory: even if the obstacle is located to the right of the vehicle V when the re-planning is carried out, its speed and direction of movement are such that the only valid maneuver for avoiding the obstacle consists in the displacement of the vehicle to the right. The curves drawn in the third and fourth diagrams clearly represent this maneuver inversion, in particular the pattern of the curvature shown in the fourth diagram shows an angular point at the generation of the updated trajectory for the connection between a first positive half-wave of a first sinusoidal pattern and a first negative half-wave of a second sinusoidal pattern.

Advantageously, it has been demonstrated that a composition of a trajectory for avoiding an obstacle according to the invention makes it possible to formulate in closed form the problem of finding the avoidance trajectory, which significantly reduces the computational burden and makes the calculation algorithm performed by a control and processing system of a vehicle feasible in real time.

It should be noted that the embodiment proposed for the present invention in the foregoing discussion is purely illustrative and non-limiting. A person skilled in the art may easily implement the present invention in different embodiments which however do not depart from the principles outlined herein. This applies in particular to the possibility of exchanging the "right" and "left" directions depending on the driving side of the country wherein the vehicles equipped with the system which is the subject of the invention are intended to circulate, which is why it is possible to identify these directions generically as referring to a first side of the vehicle and a second side of the vehicle.

Obviously, without prejudice to the principle of the invention, the embodiments and the details of implementation may be greatly modified with respect to those described and illustrated purely by way of non-limiting example, without thereby departing from the scope of protection of the invention as defined in the accompanying claims.

**Claims**

1.  A method for generating an avoidance trajectory ($S_{gen}$; $T_1$, $T_2$) of a detected obstacle (W) for a land vehicle (V) traveling along a planned path, particularly in an assisted driving or autonomous driving scenario and controlling a vehicle along the trajectory with a tracking controller, wherein the tracking controller has a maximum bandwidth and tracks said avoidance trajectory by means of driving actuation means comprising at least one of a steering system, a braking system and a propulsion system, wherein said avoidance trajectory ($S_{gen}$; $T_1$, $T_2$) includes at least one curvature ($C_{gen}$) with respect to a current reference direction of the vehicle (V),
    wherein said curvature ($C_{gen}$) has an amplitude which evolves over time with a sinusoidal pattern or with a composite pattern including sections with sinusoidal pattern and constant value sections, **characterized in that** said sinusoidal pattern has a frequency lower than the maximum bandwidth frequency of the tracking controller.

2.  The method according to claim 1, wherein said sinusoidal pattern has a constant period.

3.  The method according to any of the preceding claims, comprising:

- a collision check, including verifying whether a current trajectory of the vehicle along a roadway (R) of said planned path intersects a collision area $(A; A_1; A_2)$ defined as a function of a detected position and velocity of said obstacle (W), whereby an avoidance maneuver must be carried out;

- a verification of the feasibility of an obstacle avoidance maneuver, including the calculation of a first avoidance trajectory having a maximum lateral displacement from a first side of the obstacle (W) and of a second avoidance trajectory having a maximum displacement from a second side of the obstacle (W) opposite to said first side, with respect to the current direction of travel of the vehicle (V); and

- a selection of an obstacle avoidance maneuver, including the selection of an avoidance trajectory $(T_1, T_2)$ between the current trajectory of the vehicle (V) and said first or said second avoidance trajectory having a maximum lateral displacement, according to a predetermined criterion.

4. The method according to claim 3, wherein said predetermined criterion includes minimizing the lateral acceleration of the vehicle (V).

5. The method according to claim 3 or 4, wherein the selection of an avoidance trajectory according to said predetermined criterion includes the selection of a maximum amplitude $(\rho_1; -\rho_2)$ of the curvature $(C_{gen})$ and of a sinusoidal period of the curvature $(C_{gen})$.

6. The method according to claim 5, wherein the selection of an obstacle avoidance maneuver includes the selection of a vehicle braking maneuver (V).

7. The method according to any one of the preceding claims, wherein said avoidance trajectory $(T_1, T_2)$ includes a first curvature from a first side of the vehicle (V) and a second curvature from a second side of the vehicle (V), the amplitude of said curvatures being comprised between a predetermined maximum amplitude $(\rho_1)$ of positive curvature and a predetermined maximum amplitude $(-\rho_2)$ of negative curvature, wherein said predetermined maximum curvature amplitudes depend on the maximum lateral acceleration that the vehicle (V) may support.

8. The method according to claim 3, wherein said collision check is periodically carried out to update said collision area $(A_1)$ and said verification of the feasibility of an obstacle avoidance maneuver is carried out each time it is found that the current trajectory of the vehicle (V) intersects the updated collision area $(A_2)$.

9. A method according to any one of the preceding claims, comprising:

mapping a vehicle driving environment (V) and detecting obstacles (W) in said environment;

generating a driving trajectory $(T_1, T_2)$ of the vehicle (V) in said environment adapted to avoid said obstacles (W); and

**characterized in that** the generation of a driving trajectory $(T_1, T_2)$ of the vehicle (V) is accomplished by implementing a method for generating an obstacle avoidance trajectory according to any one of Claims 1 to 8.

10. System for the generation of an obstacle avoidance trajectory (W) for a land vehicle (V) driving along a planned path, particularly in an assisted driving or autonomous driving scenario, comprising:

- means (P) for acquiring vehicle positioning data (V), adapted to emit a signal indicative of coordinates of an actual current position of the vehicle (V) and of an actual current direction angle of the vehicle (V) with respect to a roadway (R) traveled by the vehicle (V);

- means (E) for acquiring positioning data for at least one object (W) which occupies said roadway (R) near the vehicle (V) and along said current real direction of the vehicle (V), adapted to emit a signal indicative of coordinates representative of the shape of said at least one object (W) with respect to the actual current position of the vehicle (V);

- means (20) for defining a trajectory of the vehicle, arranged to calculate a local trajectory $(T_1, T_2)$ of movement of the vehicle (V) as a function of the coordinates of an actual current position of the vehicle (V) and an actual current direction angle of the vehicle (V) as well as of the representative coordinates of the shape of said at least one object (W), and adapted to emit a signal indicative of the expected vehicle coordinates (V) along said trajectory $(T_1, T_2)$ and an expected local forward direction of the vehicle (V); and

- means (30) for tracking the trajectory, adapted to receive said signal indicative of expected coordinates of the vehicle (V) along said trajectory $(T_1, T_2)$ and of an expected local forward direction of the vehicle (V) and arranged to emit control signals of vehicle driving actuating means (40, 42, 44) (V) comprising at least one of the steering system (44), the braking system (42) and the propulsion system (40) of the vehicle (V), for the tracking of said

trajectory ($T_1$, $T_2$),

**characterized in that** the trajectory defining and control means (20) of the vehicle (V) are programmed to implement a method for generating an obstacle avoidance trajectory for a land vehicle (V) traveling along a planned path and controlling the vehicle according to any one of claims 1 to 8.

**Patentansprüche**

1. Verfahren zum Erzeugen einer Vermeidungstrajektorie ($S_{gen}$; $T_1$, $T_2$) für ein erkanntes Hindernis (W) für ein Landfahrzeug (V), das sich entlang eines geplanten Pfades bewegt, insbesondere in einem unterstütztem oder autonomem Fahrszenario, sowie zum Steuern eines Fahrzeugs entlang der Trajektorie mittels eines Verfolgungssteuereinheit, wobei die Verfolgungssteuereinheit eine maximale Bandbreite aufweist und die Vermeidungstrajektorie mittels Fahrbetätigungsmittel verfolgt, die mindestens eines der folgenden Systeme umfassen: ein Lenksystem, ein Bremssystem und ein Antriebssystem, wobei die Vermeidungstrajektorie ($S_{gen}$; $T_1$, $T_2$) mindestens eine Krümmung ($C_{gen}$) in Bezug auf eine aktuelle Referenzrichtung des Fahrzeugs (V) umfasst, wobei die Krümmung ($C_{gen}$) eine Amplitude aufweist, die sich über die Zeit mit einer sinusförmigen Konfiguration oder mit einer zusammengesetzten Konfiguration entwickelt, die Abschnitte mit sinusförmiger Konfiguration und Abschnitte mit konstantem Wert umfasst, **dadurch gekennzeichnet, dass** die sinusförmige Konfiguration eine Frequenz aufweist, die geringer als die maximale Bandbreitenfrequenz der Verfolgungssteuereinheit ist.

2. Verfahren nach Anspruch 1, wobei die sinusförmige Konfiguration eine konstante Periode aufweist.

3. Verfahren nach einem der vorhergehenden Ansprüche, umfassend:

   - eine Kollisionsprüfung umfassend Prüfen, ob eine aktuelle Trajektorie des Fahrzeugs entlang einer Fahrbahn (R) des geplanten Pfades einen Kollisionsbereich (A; $A_1$; $A_2$) schneidet, der in Abhängigkeit von einer erkannten Position und Geschwindigkeit des Hindernisses (W) definiert wird, wodurch ein Vermeidungsmanöver durchgeführt werden muss;
   - eine Überprüfung der Durchführbarkeit eines Hindernisvermeidungsmanövers, einschließlich der Berechnung einer ersten Vermeidungstrajektorie aufweisend eine maximale seitliche Verschiebung von einer ersten Seite des Hindernisses (W) und einer zweiten Vermeidungstrajektorie aufweisend eine maximale Verschiebung von einer zweiten Seite des Hindernisses (W), die der ersten Seite in Bezug auf die aktuelle Fahrtrichtung des Fahrzeugs (V) gegenüberliegt; und
   - eine Auswahl eines Hindernisvermeidungsmanövers, einschließlich der Auswahl einer Vermeidungstrajektorie ($T_1$, $T_2$) zwischen der aktuellen Trajektorie des Fahrzeugs (V) und der ersten oder zweiten Vermeidungstrajektorie aufweisend eine maximale seitliche Verschiebung nach einem vorgegebenen Kriterium.

4. Verfahren nach Anspruch 3, wobei das vorgegebene Kriterium das Minimieren der seitlichen Beschleunigung des Fahrzeugs (V) umfasst.

5. Verfahren nach Anspruch 3 oder 4, wobei die Auswahl einer Vermeidungstrajektorie nach dem vorgegebenen Kriterium die Auswahl einer maximalen Amplitude ($p_1$; $-p_2$) der Krümmung ($C_{gen}$) und einer sinusförmigen Periode der Krümmung ($C_{gen}$) umfasst.

6. Verfahren nach Anspruch 5, wobei die Auswahl eines Hindernisvermeidungsmanövers die Auswahl eines Bremsmanövers des Fahrzeugs (V) umfasst.

7. Verfahren nach einem der vorhergehenden Ansprüche, wobei die Vermeidungstrajektorie ($T_1$, $T_2$) eine erste Krümmung von einer ersten Seite des Fahrzeugs (V) und eine zweite Krümmung von einer zweiten Seite des Fahrzeugs (V) umfasst, wobei sich die Amplitude der Krümmungen zwischen einer vorgegebenen maximalen Amplitude ($p_1$) der positiven Krümmung und einer vorgegebenen maximalen Amplitude ($-p_2$) der negativen Krümmung befindet, wobei die maximalen Krümmungsamplituden von der maximalen seitlichen Beschleunigung, die das Fahrzeug (V) halten kann, abhängig ist.

8. Verfahren nach Anspruch 3, wobei die Kollisionsprüfung periodisch durchgeführt wird, um den Kollisionsbereich (A1) zu aktualisieren, und wobei die Überprüfung der Durchführbarkeit eines Hindernisvermeidungsmanövers jedes Mal durchgeführt wird, wenn festgestellt wird, dass die aktuelle Trajektorie des Fahrzeugs (V) den aktualisierten Kollisionsbereich (A2) schneidet.

9. Verfahren nach einem der vorhergehenden Ansprüche, umfassend:

Darstellen einer Fahrumgebung des Fahrzeugs (V) und Erkennen Hindernissen (W) in der Umgebung; Erzeugen einer Fahrtrajektorie ($T_1$, $T_2$) des Fahrzeugs (V) in der Umgebung, die eingerichtet ist, die Hindernisse (W) zu vermeiden; und

**dadurch gekennzeichnet, dass** die Erzeugung einer Fahrtrajektorie ($T_1$, $T_2$) des Fahrzeugs (V) durchgeführt wird, indem ein Verfahren zum Erzeugen einer Hindernisvermeidungstrajektorie nach einem der Ansprüche 1 bis 8 implementiert wird.

10. System zur Erzeugung einer Hindernisvermeidungstrajektorie (W) für ein Landfahrzeug (V), das sich entlang eines geplanten Pfades bewegt, insbesondere in einem unterstütztem oder autonomem Fahrszenario, umfassend:

Mittel (P) zum Erfassen Fahrzeugpositionsdaten (V), die eingerichtet sind, ein Signal auszugeben, das die Koordinaten einer tatsächlichen aktuellen Position des Fahrzeugs (V) und eines tatsächlichen aktuellen Richtungswinkels des Fahrzeugs (V) in Bezug auf eine von dem Fahrzeug (V) befahrene Fahrbahn (R) anzeigt; Mittel (E) zum Erfassen Positionsdaten für mindestens ein Objekt (W), das die Fahrbahn (R) in der Nähe des Fahrzeugs (V) und entlang der aktuellen tatsächlichen Fahrtrichtung des Fahrzeugs (V) belegt, wobei die Mittel eingerichtet sind, ein Signal auszugeben, das Koordinaten angibt, die die Gestalt des mindestens einen Objekts (W) in Bezug auf die aktuelle tatsächliche Position des Fahrzeugs (V) darstellen; Mittel (20) zum Definieren einer Fahrzeugtrajektorie, die eingerichtet sind, eine lokale Trajektorie ($T_1$, $T_2$) der Bewegung des Fahrzeugs (V) in Abhängigkeit von den Koordinaten einer aktuellen tatsächlichen Position des Fahrzeugs (V) und einem aktuellen tatsächlichen Richtungswinkel des Fahrzeugs (V) sowie von den darstellenden Koordinaten der Gestakt des mindestens einen Objekts (W) zu berechnen und die eingerichtet sind, ein Signal auszugeben, das die erwarteten Fahrzeugkoordinaten (V) entlang der Trajektorie ($T_1$, $T_2$) und eine erwartete lokale Vorwärtsrichtung des Fahrzeugs (V) anzeigt; und Mittel (30) zum Verfolgen der Trajektorie, die eingerichtet sind, das Signal zu empfangen, das die erwarteten Koordinaten des Fahrzeugs (V) entlang der Trajektorie ($T_1$, $T_2$) und eine erwartete lokale Vorwärtsrichtung des Fahrzeugs (V) anzeigt, und die eingerichtet sind, Steuersignale für Fahrzeugführung-Betätigungsmittel (40, 42, 44) (V) auszugeben, umfassend mindestens eines der folgenden Systeme: das Lenksystem (44), das Bremssystem (42) und das Antriebssystem (40) des Fahrzeugs (V), zur Verfolgung der Trajektorie ($T_1$, $T_2$), **dadurch gekennzeichnet, dass**
Mittel (20), die die Trajektorie des Fahrzeugs (V) definieren und steuern, programmiert sind, um ein Verfahren zum Erzeugen einer Hindernisvermeidungstrajektorie für ein Landfahrzeug (V), das sich entlang eines geplanten Pfades bewegt, und zum Steuern des Fahrzeugs nach einem der Ansprüche 1 bis 8 zu implementieren.

**Revendications**

1. Procédé de génération d'une trajectoire d'évitement ($S_{gen}$ ; $T_1$, $T_2$) d'un obstacle détecté (W) pour un véhicule terrestre (V) se déplaçant le long d'un trajet planifié, en particulier dans un scénario de conduite assistée ou de conduite autonome, et de commande d'un véhicule le long de la trajectoire au moyen d'un contrôleur de suivi, ledit contrôleur de suivi ayant une bande passante maximale et suivant ladite trajectoire d'évitement au moyen de moyens d'actionnement de conduite comprenant au moins un système de direction, un système de freinage et un système de propulsion, ladite trajectoire d'évitement ($S_{gen}$ ; $T_1$, $T_2$) comprenant au moins une courbure ($C_{gen}$) par rapport à une direction de référence actuelle du véhicule (V),
ladite courbure ($C_{gen}$) présentant une amplitude évoluant dans le temps selon un profil sinusoïdal ou selon un profil composite comprenant des sections à profil sinusoïdal et des sections à valeur constante, **caractérisé en ce que** ledit profil sinusoïdal présente une fréquence inférieure à la fréquence maximale de la bande passante du contrôleur de suivi.

2. Le procédé selon la revendication 1, dans lequel ledit profil sinusoïdal présente une période constante.

3. Le procédé selon l'une quelconque des revendications précédentes, comprenant :

une vérification de collision, incluant la vérification de l'intersection éventuelle d'une trajectoire actuelle du véhicule le long d'une chaussée (R) dudit trajet planifié avec une zone de collision (A ; $A_1$ ; $A_2$) définie en fonction

d'une position et d'une vitesse détectées dudit obstacle (W), nécessitant ainsi l'exécution d'une manœuvre d'évitement ;

une vérification de la faisabilité d'une manœuvre d'évitement d'obstacle, incluant le calcul d'une première trajectoire d'évitement présentant un déplacement latéral maximal d'un premier côté de l'obstacle (W) et d'une deuxième trajectoire d'évitement présentant un déplacement maximal d'un second côté de l'obstacle (W), opposé audit premier côté, par rapport à la direction actuelle de déplacement du véhicule (V) ; et

une sélection d'une manœuvre d'évitement d'obstacle, incluant la sélection d'une trajectoire d'évitement $(T_1, T_2)$ entre la trajectoire actuelle du véhicule (V) et ladite première ou ladite deuxième trajectoire d'évitement présentant un déplacement latéral maximal, selon un critère prédéterminé.

4. Le procédé selon la revendication 3, dans lequel ledit critère prédéterminé comprend la minimisation de l'accélération latérale du véhicule (V).

5. Le procédé selon la revendication 3 ou 4, dans lequel la sélection d'une trajectoire d'évitement selon ledit critère prédéterminé comprend la sélection d'une amplitude maximale $(p_1; -\rho_2)$ de la courbure $(C_{gen})$ et d'une période sinusoïdale de la courbure $(C_{gen})$.

6. Le procédé selon la revendication 5, dans lequel la sélection d'une manœuvre d'évitement d'obstacle comprend la sélection d'une manœuvre de freinage du véhicule (V).

7. Le procédé selon l'une quelconque des revendications précédentes, dans lequel ladite trajectoire d'évitement $(T_1, T_2)$ comprend une première courbure d'un premier côté du véhicule (V) et une seconde courbure d'un second côté du véhicule (V), l'amplitude desdites courbures étant comprise entre une amplitude maximale prédéterminée $(p_1)$ de courbure positive et une amplitude maximale prédéterminée $(-p_2)$ de courbure négative, lesdites amplitudes maximales prédéterminées de courbure dépendant de l'accélération latérale maximale que le véhicule (V) peut supporter.

8. Le procédé selon la revendication 3, dans lequel ladite vérification de collision est effectuée périodiquement pour mettre à jour ladite zone de collision $(A_1)$ et ladite vérification de la faisabilité d'une manœuvre d'évitement d'obstacle est effectuée chaque fois qu'il est constaté que la trajectoire actuelle du véhicule (V) intersecte la zone de collision mise à jour $(A_2)$.

9. Procédé selon l'une quelconque des revendications précédentes, comprenant :

la cartographie d'un environnement de conduite du véhicule (V) et la détection d'obstacles (W) dans ledit environnement ;

la génération d'une trajectoire de conduite $(T_1, T_2)$ du véhicule (V) dans ledit environnement, adaptée à éviter lesdits obstacles (W) ; et

**caractérisé en ce que** la génération d'une trajectoire de conduite (T1, T2) du véhicule (V) est réalisée en mettant en œuvre un procédé de génération d'une trajectoire d'évitement d'obstacle selon l'une quelconque des revendications 1 à 8.

10. Système de génération d'une trajectoire d'évitement d'obstacle (W) pour un véhicule terrestre (V) se déplaçant le long d'un trajet planifié, en particulier dans un scénario de conduite assistée ou de conduite autonome, comprenant :

des moyens (P) d'acquisition de données de positionnement du véhicule (V), adaptés à émettre un signal indicatif des coordonnées d'une position actuelle réelle du véhicule (V) et d'un angle de direction actuel réel du véhicule (V) par rapport à une chaussée (R) parcourue par le véhicule (V) ;

des moyens (E) d'acquisition de données de positionnement pour au moins un objet (W) occupant ladite chaussée (R) à proximité du véhicule (V) et le long de ladite direction actuelle réelle du véhicule (V), adaptés à émettre un signal indicatif des coordonnées représentatives de la forme dudit au moins un objet (W) par rapport à la position actuelle réelle du véhicule (V) ;

des moyens (20) de définition d'une trajectoire du véhicule, agencés pour calculer une trajectoire locale $(T_1, T_2)$ de déplacement du véhicule (V) en fonction des coordonnées d'une position actuelle réelle du véhicule (V) et d'un angle de direction actuel réel du véhicule (V) ainsi que des coordonnées représentatives de la forme dudit au moins un objet (W), et adaptés à émettre un signal indicatif des coordonnées attendues du véhicule (V) le long de ladite trajectoire $(T_1, T_2)$ et d'une direction de déplacement locale attendue du véhicule (V) ; et

des moyens (30) de suivi de trajectoire, adaptés à recevoir ledit signal indicatif des coordonnées attendues du véhicule (V) le long de ladite trajectoire ($T_1$, $T_2$) et d'une direction de déplacement locale attendue du véhicule (V) et agencés pour émettre des signaux de commande de moyens d'actionnement de conduite du véhicule (40, 42, 44) (V) comprenant au moins l'un du système de direction (44), du système de freinage (42) et du système de propulsion (40) du véhicule (V), pour le suivi de ladite trajectoire ($T_1$, $T_2$),

**caractérisé en ce que**

les moyens de définition et de commande de trajectoire (20) du véhicule (V) sont programmés pour mettre en œuvre un procédé de génération d'une trajectoire d'évitement d'obstacle pour un véhicule terrestre (V) se déplaçant le long d'un trajet planifié et de commande du véhicule selon l'une quelconque des revendications 1 à 8.

FIG. 1

FIG. 3

FIG. 2

FIG. 4

FIG. 5

FIG. 6

EP 3 894 293 B1

FIG. 7

FIG. 8

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002059026 A
- DE 102008016377